# EUROPEAN PATENT SPECIFICATION

(11) **EP 4 609 414 B1**
(45) Date of publication and mention of the grant of the patent: **28.01.2026**
(21) Application number: 23790561.7
(22) Date of filing: 12.10.2023
(51) Int. Cl.: H01G 11/28, H01G 11/26, H01G 11/52, H01G 11/68, H01G 11/70

(54) **ASSEMBLY OF ALUMINIUM ELECTRODES AND BARRIER LAYERS FOR SUPER CAPACITOR EMBEDDING A STANDARD CAPACITOR AND HAVING IMPROVED RESISTANCE TO CORROSION**
ZUSAMMENSTELLUNG VON ALUMINIUMELEKTRODEN UND SPERRSCHICHTEN FÜR EINEN SUPERKONDENSATOR, DER EINEN STANDARDKONDENSATOR EINBETTET UND EINE VERBESSERTE KORROSIONSBESTÄNDIGKEIT AUFWEIST
ASSEMBLAGE D'ÉLECTRODES EN ALUMINIUM ET DE COUCHES BARRIÈRES POUR UN SUPERCONDENSATEUR INTÉGRANT UN CONDENSATEUR STANDARD ET PRÉSENTANT UNE MEILLEURE RÉSISTANCE À LA CORROSION

(30) Priority: 25.10.2022 US 202263419081 P
(43) Date of publication of application: 03.09.2025
(73) Proprietor: INNOCELL APS, 5700 Svendborg (DK)
(72) Inventor: VINDT, Steffen Thrane, 5853 Ørbæk (DK); YDE-ANDERSEN, Steen, 5700 Svendborg (DK); LUNDSGAARD, Jørgen Schjerning, 5700 Svendborg (DK); THOMAS, David Morgan, 5260 Odense S (DK)
(74) Representative: Graham Watt & Co
(86) International application number: PCT/EP2023/078424
(87) International publication number: WO 2024/088780

(56) References cited:
- EP-A1- 1 962 308
- WO-A1-2022/104213
- CN-A- 109 346 725
- JP-B1- 6 183 570
- US-A- 4 023 079
- US-A1- 2013 155 578

## Description

### FIELD

This disclosure relates to the combination of an ionic permeable electron charge transfer layer in immediate contact with an elastomeric hydrophobic corrosion barrier layer to provide electronic conduction through the combined layers and also to prevent ionic species from permeating to a metal current collector surface such as aluminum, thereby ensuring protection against corrosion processes on the metal current collector surface. High-capacity super-capacitor/electrochemical storage devices with metallic components which are not subject to corrosion and which exhibit an enhanced capacity to store and transfer electrical power at decreased cost and weight are provided.

### BACKGROUND

Electrochemical storage devices that combine storage cells and capacitors provide very high discharge rates.

Super-capacitors connected to storage cells achieve extremely high specific capacitances by superior utilization of charge storage in the double-layer interface between a porous electrode and a liquid electrolyte solution. This technology has several advantages over conventional battery technologies for storage and discharge of electrical energy when high power density and long life of the storage device are most important. The high power density of super-capacitors enables charging and discharging much faster than batteries and it allows them to deliver power to a load compared to a batteries having a significantly superior energy density.

A method of stacking of capacitors in order to achieve a total charge capacity which is the multiple of each capacitors' capacity is disclosed in U.S. Patent Application Publication 2019/0295781 now issued as U.S. patent number 11,024,466. This super-capacitor and energy source combination allows the conduction of a large current to an externally connected load. This requires critical consideration of disadvantages caused by Joule heating of conducting components.

The thermal diffusivity of components influences the choice of component materials and design. The dissipation of heat, electrochemical processes affecting component integrity, thermal dimensional effects and corrosion are critical concerns.

Particular attention is given to the resistance in the conducting path. Reliable materials are selected for having a minimal specific resistance in their bulk and also a minimal peripheral specific resistance.

Internal heat generation during rapid discharge requires optimal material choice for the external electrodes in order to achieve a high thermal diffusivity and thermal transfer to the surroundings. The terminal electrodes of each capacitor-energy storage cell are components where thermal loading is critically high. These components are selected from metals having high thermal conductivity and diffusivity, and low specific resistance.

A super-capacitor cell with a capacitance of 400 Farad and an area of 11000cm² has a calculated dissipation of 0.2 Watts per cm² during discharge.

When considering the properties of various metals which may be considered for utilization in super-capacitors, the metals which give the greatest benefit are aluminum, with its low density, and copper with its high conductivity and high thermal diffusivity.

However, aluminum has not become a conventional current collector or electrode material due to its surface becoming passive due to very rapid formation of compact, impervious, superficial oxide and corrosion due to the reaction of aluminum with water.

Copper is also easily affected by oxidation in aqueous media. Copper foil plated with 5 micron thick gold is more stable in a super-capacitor using a perchlorate electrolyte, but is not a satisfactory functional alternative as it is considerably more expensive then aluminum and has a much higher density.

Super-capacitors utilizing an organic non-aqueous electrolyte which do not suffer from corrosion of an aluminum current collector have been disclosed. See, for example, U.S. Published Patent Application No. 20190311862A1. However, traditional aqueous electrolytes have the advantage of high conductivity, high specific capacitances and low cost. Furthermore, they allow for a wide range of side-reactions and they are non-flammable.

Application of a protective barrier is not sufficiently effective to prevent pinhole corrosion failure pattern when primers based on an aqueous solution of carboxy-methyl-cellulose are applied. While hydrophilic primers have excellent conductivity, they are unable to avoid voids and limited ionic permeability in the primer film.

There is a need for super-capacitors with aluminum based electrodes which do not corrode.

US4023079A discloses a graphite-elastomer sandwich as impervious connector for an electrical capacitor. WO2022/104213A1 discloses covalently bonded coatings for foils used as current collectors in energy storage devices. EP1962308A1 discloses an electric double layer capacitor. US2013/0155578A1 describes a capacitor and manufacturing method thereof. CN109346725A describes an aluminum anode for an energy storage device, an energy storage device and production methods for an aluminum anode and an energy storage device. JP6183570B1 describes a negative electrode active material, a negative electrode, and a lithium-ion secondary battery.

### SUMMARY

The invention is defined by the appended claims.

This disclosure relates to a configuration for high-capacity super-capacitor/electrochemical storage devices where metallic components are not subject to corrosion and which enhances the capacity to store and transfer electrical power with significantly improved performance and cost.

An aspect of this disclosure relates to a super-capacitor assembly comprising standard capacitor layers between top and bottom aluminum capacitor foil sheets with an elastomeric hydrophobic corrosion barrier layer followed by an ionic permeable electron charge transfer layer between the standard capacitor layers and the top and bottom aluminum capacitor foil sheets.

In one aspect, the ionic permeable electron charge transfer layer comprises conductive carbon black, an alcohol, an ether and a binder dispersed in an aqueous medium.

In another aspect, the ionic permeable electron charge transfer layer comprises a conductive carbon ink.

In one aspect, the elastomeric hydrophobic corrosion barrier layer comprises a polyisobutylene or polypropylene composition.

Another aspect of the present disclosure relates to a super-capacitor assembly as defined in claim 1 comprising a bottom aluminum capacitor foil sheet, a first ionic permeable electron charge transfer layer on top of the bottom aluminum capacitor foil sheet, a first

elastomeric hydrophobic corrosion barrier layer on top of the first ionic permeable electron charge transfer layer, standard capacitor layers, a second elastomeric hydrophobic corrosion barrier layer on top of the capacitor layers, a second ionic permeable electron charge transfer layer on top of the second ionic isolating and protective layer and a top aluminum capacitor foil sheet on top of the second ionic permeable electron charge transfer layer.

In one aspect, the first and second ionic permeable electron charge transfer layers comprise conductive carbon black, an alcohol, an ether and a binder dispersed in an aqueous medium.

In another aspect, the first and second ionic permeable electron charge transfer layers comprise a conductive carbon ink.

In one aspect, the first and second elastomeric hydrophobic corrosion barrier layers comprise a polyisobutylene or polypropylene composition.

In one aspect, the standard capacitor of the super-capacitors of this disclosure comprises a first high surface area carbon layer; an electrolyte impregnated paper separating membrane on top of the first high surface area carbon layer; and a second high surface area carbon layer on top of the electrolyte impregnated paper separating membrane.

### BRIEF DESCRIPTION OF THE FIGURE

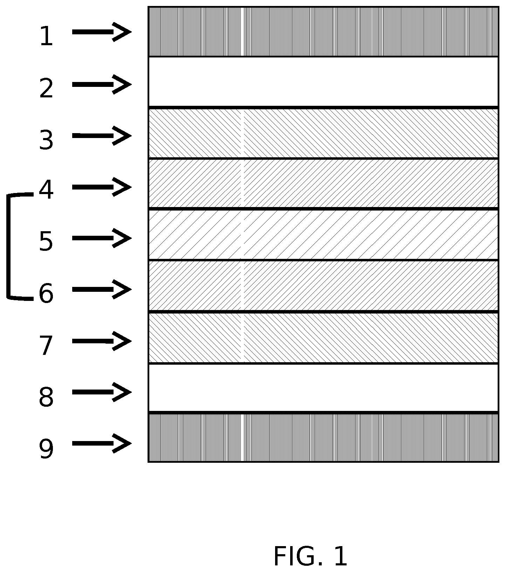

FIG. 1 is a diagram depicting a cross section of a nonlimiting embodiment of a 9 layer super-capacitor with bracketed layers 4, 5 and 6 making up a standard capacitor as disclosed herein.

### DETAILED DESCRIPTION

Provided by this disclosure is a combination of an ionic permeable electron charge transfer layer in immediate contact with an elastomeric hydrophobic corrosion barrier layer to provide electronic conduction through the combined layers and also to prevent ionic species from permeating to a metal current collector surface such as aluminum, thereby ensuring protection against corrosion processes on the metal current collector surface. High-capacity super-capacitor/electrochemical storage devices with metallic components which are not subject to corrosion which exhibit an enhanced capacity to store and transfer electrical power at lower cost are provided.

The use of polymeric barrier coatings having the ability to conduct large current flow is well known. For these barrier coatings, rubber and plastic binder materials are compounded with conductive carbon materials such as conductive carbon black, graphite or powdered metals. Such barriers can be applied either as a coated or calendared or roll layer onto a substrate.

Chlorobutyl rubber polymer (CIIR) is a copolymer of chlorinated isobutylene and small amounts of isoprene which provide unsaturated sites for vulcanization. This elastomer has low gas and moisture permeability, excellent resistance to aging and excellent weather and ozone resistance. The chlorinated sites are reactive, providing faster cure and excellent adhesion to unsaturated rubbers and metals. Chlorobutyl is an established choice for rubber articles needing good resistance to chemicals, weathering and ozone. It is used for seals and membranes, air tubes for vehicle tire applications.

A CIIR elastomeric compound filled with high surface area KETJENBLACK EC-600JD having a high content of distorted, hexagonally packed flakes rapidly becomes increasingly viscous as the Ketjenblack level progressively increases. Compound viscosity and processing is less influenced using Vulcan VC72 so generally carbon black types are selected in barrier layer formulations in order to provide a coating material with ability to be calendered (rolled) as film or applied as a liquid coating with excellent adhesion, integrity, conductivity, and elasticity. For example, due to its unique morphology and the high surface area of approx. 1500m²/g (BET), only one third the amount of Ketjenblack EC-600JD is needed compared to other commercial electro-conductive blacks in order to achieve the same conductivity.

Barrier compound CBR-021 is a typical example of a conventional chlorobutyl polymer composition with its contents given below. This composition is used in a wide range of electrically conducting applications.

| | |
|---|---|
| Exxon Chlorobutyl 1066 | 100.0 |
| Paraffin oil SAE50 | 6.0 |
| Carbon Black Vulcan XC72 | 20.0 |
| Ketjenblack EC-600JD | 30.0 |
| Armowax W-440 | 4.0 |
| Zinc oxide | 5.0 |
| Sulfur | 2.0 |
| MBTS(mercaptobenzthiazylsulfenamide) | 0.2 |

The combination of hydrophobic and hydrophilic groups provides improved wetting of the filler surface by the polymer matrix ensuring optimum dispersion.

Further, the volume ratio of oiled polymer to carbon black filler is 21.7% of the compound volume. The uncured compound is highly plastic with moderate viscosity and the mixing process provides for excellent filler dispersion. Forming properties do not show rheological constraint and provide completely non-permeable layers displaying strong grip and tack. The compound is suitable for a subsequent hot rolling or calendaring application process to aluminum foil. Alternatively the compound can be dissolved in suitable paraffinic/aliphatic or aromatic solvents in order to obtain a cement solution that can be applied by printing or coating. A compound haying a blend of carbon black Vulcan XC72 (20 parts per hundred rubber (phr)) with 30phr Ketjenblack EC-600JD provides optimum electric conductivity without running into rheological difficulties in mixing and forming which arise when the proportion of Ketjenblack EC-600JD is increased due to the much greater surface area of the Ketjenblack EC-600JD component compared to Vulcan XC72. Further, the compound does not shrink or pucker before or after coating and curing.

Initial attempts to prevent aluminum corrosion in super-capacitors by the inventors herein involved applying a layer of this chlorobutyl barrier compound to the aluminum surface. A test super-capacitor cell was made with the chlorobutyl barrier compound 50 micrometers thick, hot-rolled onto a 30 micrometer thick aluminum foil. However, the resistivity was much higher than expected at 53 ohm.cm². In contrast, testing of a 50 micrometer sheet of the chlorobutyl compound between gold-plated copper foil sheets corresponded to the well-established level for chlorobutyl conductive carbon compounds at 0.4 ohm.cm².

The conclusion from this testing was that the conductivity of the impermeable hydrophobic elastomeric compound in surface contact with aluminum foil was adversely affected. The conductive properties of oxidized aluminum normally permits easy electrochemical conduction at aluminum surfaces with low loss. However, in this test the charge transfer was being inhibited between the elastomeric compound and aluminum metal.

Study of the conductivity deficiency was that the impermeable elastomer in the chlorobutyl barrier, the high adhesion, tack to metal surfaces together with the polymers impermeability and condition at a machine process affected surface and the conductive contact to the polymeric bulk material.

Attempts were made to establish that a surface layer having a deficiency of conducting carbon black particles existed by grinding the barrier compound surface with 200 mesh silicon carbide. Such attempts were not successful and it was concluded that the mode of conductivity from aluminum to the elastomeric barrier membrane was characteristically different than the mode in the original cell where a continuous dispersed electrolyte path from the capacitor to the current collector foil existed.

Replacement of chlorobutyl with chloroprene and styrene-butadiene polymers did not change the conductivity which remained just as low as with the chlorobutyl polymer.

The interface between the oxidized aluminum foil surface and its ability to transfer charge was therefore examined.

Aluminum is covered by a thin layer of oxide which rapidly grows on an exposed metal surface. Conventional sources estimate the thickness of the oxide layer is up to 10 nm. Recent measurements using tunneling and Density Functional Theory (DFT) techniques indicate that there is good electron conductivity in the 4nm layer close to the metal which declines rapidly in the outer layers in contact with air. Alumina, as a ceramic, has a much high resistivity of 1.10⁻¹⁴ ohm cm and electronic conduction is very low corresponding to that of an insulator.

Conductivity of the oxide layer on aluminum foil is determined by tunneling to transferring sites at dislocations, crystal defects, or cavities and presence of reactive sites water or hydroxides in the oxide layer. Some attribute the conductivity to be related to oxide groups, crystallographic defects in alumina, water, valency deviations due to structural anomalies.

The inventors of this disclosure found that coating of a reliable conductive hydrophilic layer onto the aluminum surface prior to application of an impermeable, highly conductive barrier layer solved conductivity restraints and resistance problems of the aluminum foils.

The conduction promoting layer to be placed on the aluminum foil surface has to be compliant and adherent to the surface. One initial plan was to make a conductive compound by combing conductive carbon black and well established binder resins based on resole type phenol-formaldehyde condensate resins. The reactive species is the phenoxide anion (C₆H₅O-) formed by de-protonation of phenol. The negative charge is delocalized over the aromatic ring, activating sites 2, 4 and 6, which then react with the formaldehyde. This feature enables the transport of charge to receptor sites. Hydroxymethyl phenols will crosslink on heating to around 120°C to form methylene and methyl ether bridges through the elimination of water molecules. It was believed that this structure could provide a 3-dimensional network of polymerized phenolic resins sites to which electrons could tunnel to. The high cross-linking density gives a hard phenolic resin conductive composite, good thermal stability, and chemical imperviousness.

A second approach was to provide a hydrophilic electron transport material that was soft and amenable, adherent and electronically conductive. This film is composed of a binder material, conductive carbon materials, dispersants and hydrophilic solvents, epoxide materials or poly-alcohols.

The disclosed technique is applicable many kinds of electrochemical devices such as charge transferring devices including batteries, capacitors and super-capacitors.

An aspect of this disclosure relates to super-capacitors comprising a conductive hydrophilic layer, also referred to herein as an ionic permeable electron charge transfer layer.

In one aspect, the super-capacitor is comprised of 9 layers with layers 1 to 4 being repeated in reverse order to form layers 6 to 9.

Layers 4, 5 and 6 form a standard capacitor with the fifth layer being an electrolyte impregnated paper separating membrane sandwiched between electrode layers 4 and 6 composed of a high surface area carbon.

In one aspect, electrode layers 4 and 6 comprise a high surface area carbon, from Kuraray Co. Ltd., highly conductive Ketjen EC600JD carbon black, sodium alginate binder and Triton X-100 dispersing agent. A nonlimiting example is Ink 463 EY, the components of which are shown below:

| Ink 463 EY | Dry wt% | Weight added |
|---|---|---|
| Demineralized water | | 371.53 |
| Triton X 100 | 0.4 | 0.33 |
| Na-alginate 1.5% | 4.0 | 220.0 |
| Ketjen BlackEC600JD | 6.0 | 4.95 |
| Kuraray YP-80 | 89.6 | 73.92 |
| Total (weight) | 100.0 | 670.73 |

For these electrode layers 4 and 6, carbons are dispersed in water or water alcohol mixtures into a paste or ink with a high shear mixer. The ink has a solid content in the range 15 - 25 wt%. These capacitive electrode layers are then coated using, for example, a doctor blade, and dried at 80 - 100°C for 30 minutes giving a layer thickness 100 microns at a width of 100 mm. This nonlimiting example of an electrode layer adheres well and has a high porosity. However, as will be understood by the skilled artisan upon reading this disclosure, alternative electrode layers well known to those of skill in the art can be used.

The 5^{th} layer is the electrolyte impregnated paper separating membrane. In one nonlimiting embodiment, this layer comprises a 35-micron thick cellulose separator such as NKK TF4035 (Nippon Kodoshi Corporation, Japan) having 75% porosity. In this nonlimiting example, two electrode sheets 30x30mm square are laminated together inside two 40x40mm and 39 micron thickness paper separator sheets. This assembly is then impregnated with a hybrid electrolyte (1M NaClO₄ in H₂O diluted / propylene carbonate (3:1) and the edges sealed with elastomeric cement. However, as will be understood by the skilled artisan upon reading this disclosure, alternative separating membranes well known to those of skill in the art can be used.

The 1^{st} and the 9^{th} layers, also referred to herein as the top and bottom layers, comprise metal capacitor foil sheets A nonlimiting example of a metal capacitor foil sheet for use in the super-capacitors disclosure herein is the EN-AW 1200 bright metallic capacitor foil sheet made from pure aluminum from Amcor Flexibles Kreuzigen, Switzerland with a thickness of 15 micrometers. However, as will be understood by the skilled artisan upon reading this disclosure, alternative metal capacitor foil sheets well known to those of skill in the art can be used.

Layers 2 and 8 comprise an ionic permeable electron charge transfer layer, also referred to herein as a hydrophilic primer compound.

In one nonlimiting embodiment, the ionic permeable electron charge transfer layer comprises conductive carbon black, alcohols, ethers and binders dispersed in an aqueous medium.

To prepare this hydrophilic primer compound, carbon black is dispersed via high shear mixing in water and polar solvents to form an ink with a solid content of 5 - 10 wt% suitable for coating in a doctor blade process. This layer was then dried at 80° to 100°C for 30 minutes giving a 3 - 8 micron thick layer with good adhesion and low contact resistivity between the underlying aluminum layer and the barrier layer situated next in order.

A nonlimiting example of a hydrophilic primer compound useful as the ionic permeable electron charge transfer layer of layers 2 and 8 is Compound DS512 contents of which are shown below:

| **Primer DS 512** | **Function** | **Content%** |
|---|---|---|
| Demineralized water | Solvent | 91.77 |
| Triton X100 | Dispersant | 0.05 |
| Propylene glycol | Wetting agent. | 3.00 |
| CMC(250k0.7) | Carboxy-methyl-cellulose | 1.75 |
| Na-alginate | Thickener, binder | 0.15 |
| KetjenblackEC600JD | Conductive carbon black | 0.90 |
| Vulcan XC72 | Conductive carbon black | 2.15 |
| Sigrafil C10 | Carbon fiber | 0.2 |

The component materials are described below.

Triton X-100 is a nonionic surfactant that has a hydrophilic polyethylene oxide chain and an aromatic hydrocarbon lipophilic or hydrophobic group.

Propylene glycol (IUPAC name: propane-1,2-diol) is a viscous, colorless liquid. It is miscible with a broad range of solvents, including water, acetone, and chloroform.

Carboxymethyl cellulose (CMC) or cellulose gum is a cellulose derivative with carboxymethyl groups (-CH2-COOH) bound to some of the groups of the glucopyranose monomers that make up the cellulose backbone.

Alginate is a complex carbohydrate obtained from seaweed.

Ketjenblack EC-600JD is a very pure carbon black suitable for antistatic and electro-conductive applications. Due to its unique morphology and the very high surface area of approx. 1500 m2/g (BET), only one third the amount of Ketjenblack EC-600JD is needed compared to conventional electro-conductive blacks in order to achieve the same conductivity. The lower loading of Ketjenblack EC-600JD allows easier processing for those polymers sensitive to filler addition, thus minimizing loss in mechanical and rheological properties.

VULCAN XC 72 by Cabot is a multi-purpose, conductive, specialty carbon black. Exhibits medium electrical conductivity, moderate processability & low sulfur and grit levels. Allows end products to deliver functionality at relatively lower loading levels. Shows good dispersion characteristics & promotes surface smoothness and preserve mechanical performance of polymer.

SIGRAFIL milled carbon fibers are produced from high-quality continuous carbon fiber tows. The fibers are unsized and deliver the strong dispersion performance needed to achieve outstanding mix and processing characteristics. They are particularly effective in situations where the mechanical properties and electric conductivity are of importance.

In another aspect, the ionic permeable electron charge transfer layer of layers 2 and 8 comprises a hydrophilic primer compound of conductive carbon ink. Such inks are used routinely in printed circuit broad applications.

A nonlimiting example of a conductive carbon ink useful in layers 2 and 8 of this invention is Ink 328-DX with components depicted below:

| Ink 328-DX | | Weight | wt% |
|---|---|---|---|
| XZ302-1 | Coates Conductive ink | 40.00 | 33.3% |
| VD 40 | cyclohexanone/Solvent naphtha | 20.00 | 16.7% |
| Methoxypropanol | | 60.00 | 50.0% |
| Total | | 120 | 100.0% |

XZ302-1 Conductive Carbon is available from Sun Chemical Corporation. XZ302-1 has been formulated as a screen-printing polymer thick film for printing over copper tracks to replace the costly process of gold plating contacts and edge connectors, and printing crossovers to replace soldered jumper wires. When fully cured, XZ302-1 will give a hard resistant film.

As will be understood by the skilled artisan upon reading this disclosure, this conductive ink is merely a nonlimiting representative example from a whole group of modified phenolic resins filled with carbon black conductive material useful in the present invention and which are routinely used to provide a wear resistant lacquer layer with excellent adhesion, aging resistance, cohesion. Such resins are modified to prevent damage due to impact or physical stress. The glass transition temperature and mechanical robustness of these materials relies on the formulation of the resin prior to establishment of a cross linked uncured resin product prior to final application and terminal curing by further cross-linking.

The 3^{rd} and 7^{th} layers of the super-capacitor form the ionic isolating and protective layer, also referred to herein as an elastomeric hydrophobic corrosion barrier layer, which is instrumental in corrosion protection of the aluminum current collector. It is comprised of a highly loaded carbon black rubber dispersed in an aliphatic solvent with a highspeed mixer.

Barrier compound CBR-021 is a typical and conventional nonlimiting example of a polymer composition useful in the present invention. While this barrier compound comprises a chlorobutyl rubber, as will be understood by the skilled artisan, alternative polymer compositions comprising a polyisobutylene or polypropylene composition with similar barrier characteristics well known to those skilled in the art can be used.

Components in CBR-021 are as follows:

| CBR-021 | Wt. |
|---|---|
| Exxon Chlorobutyl 1066 | 100.0 |
| Paraffin oil SAE50 | 6.0 |
| Carbon Black Vulcan XC72 | 20.0 |
| Ketjenblack EC-600JD | 30.0 |
| Armowax W-440 | 4.0 |
| Zinc oxide | 5.0 |
| Sulfur | 2.0 |
| MBTS(mercaptobenzthiazylsulfenamide) | 0.2 |

Another nonlimiting example of a barrier compound useful in layers 3 and 8 is CBR039. The components of CBR039 are as follows:

| CBR-039 | Wt. |
|---|---|
| Exxon Chlorobutyl 1066 | 100.0 |
| Paraffin oil SAE50 | 3.0 |
| Ketjenblack EC-600JD | 20.0 |
| Armowax W-440 | 4.0 |
| Zinc oxide | 5.0 |
| Sulfur | 2.0 |
| MBTS(mercaptobenzthiazylsulfenamide) | 0.2 |

Variants of these compositions which can also be used in this invention cover a wide range of electrically conducting applications. Cross-linking using an accelerator ensures a good cohesion of the layer. The final compound has a solid content in the range 10 - 15% by weight.

In one nonlimiting embodiment, this barrier layer 3 and 7 is applied to the ionic permeable layer 2 or 8 with a doctor blade and dried at 150°C for 60 minutes. This coating step may be repeated so that any pinholes in the underlying layers are filled and until the final thickness of the barrier layer is in the range 10 - 20 microns. The layer adheres very well to the conductive layer and has a low resistance and is completely impervious to the electrolyte. However, as will be understood by the skilled artisan upon reading this disclosure, alternative methods for applying the barrier at various thicknesses well known to those of skill in the art can be used.

The following nonlimiting examples are provided to further illustrate the present invention.

### EXAMPLES

### Example 1: Super-capacitor with ionic permeable electron charge transfer layer of conductive carbon black, alcohol, ether and a binder dispersed in an aqueous medium

A 9-layer super-capacitor was constructed with the following layers (see FIG. 1):

The 1^{st} and the 9^{th} layers comprised EN-AW 1200 bright metallic capacitor foil sheets made from pure aluminum from Amcor Flexibles Kreuzigen, Switzerland with a thickness of 15 micrometers.

Ionic permeable electron charge transfer layers 2 and 8 comprised the hydrophilic compound DS512.

Elastomeric hydrophobic corrosion barrier layers 3 and 7 comprised a chlorobutyl barrier coating.

Electrode layers 4 and 6 comprised Ink 463 EY coated using a doctor blade, and dried at 80 - 100°C for 30 minutes giving a layer thickness 100 microns at a width of 100 mm.

The 5^{th} layer comprised the 35-micron thick cellulose separator NKK TF4035 (Nippon Kodoshi Corporation, Japan) having 75% porosity. Two electrode sheets 30x30mm square were laminated together inside two 40x40mm and 39 micron thickness paper separator sheets. This assembly was then impregnated with a hybrid electrolyte (1M NaClO₄ in H₂O diluted / propylene carbonate (3:1) and the edges sealed with elastomeric cement.

The total resistance of the test assembly was 2.53ohm.cm² which was quite satisfactory and fully comparable to a cell using gold plated copper as current collector foil.

### Example 2: Super-capacitor with ionic permeable electron charge transfer layer of a conductive carbon ink

A super-capacitor cell was made using Inks 328-DX, 318-DG and 350EY. Ink 328-DX was coated on to the Aluminum-Capacitor foil EN-AW 1200, 15 microns thick, 100 mm wide and 25 cm long, dried and subsequently cured giving a 5 micron thick layer followed by the chlorobutyl barrier coating, ink 318 DG.

After drying and curing at 150C resulting in a 15 micron thick layer the electrode layer was coated on top of the chlorobutyl barrier and dried into a 90 micron thick layer.

The following steps in the making of the super-capacitor followed a similar procedure to that of Example 1.

The whole assembly consists of 2 electrodes as described above together with the separator filled hybrid electrolyte (1M NaClO₄ in H₂O diluted / propylene carbonate (3:1). The total resistance of the test assembly was 1.9 ohm.cm2 which was quite satisfactory.

## Claims

1. A super-capacitor assembly comprising capacitor layers (4, 5, 6) between top and bottom aluminum current collectors (1,9) with an ionic permeable electron charge transfer layer (2, 8) in direct contact with an elastomeric hydrophobic corrosion barrier layer (3, 7) comprising carbon black rubber or alternative similar polymer composition dispersed in an aliphatic solvent between the capacitor layers (4, 5, 6) and the top and bottom aluminum current collectors (1,9).

2. The super-capacitor assembly of claim 1 wherein the ionic permeable electron charge transfer layer (2, 8) comprises conductive carbon black, an alcohol, an ether and a binder dispersed in an aqueous medium.

3. The super-capacitor assembly of claim 1 wherein the ionic permeable electron charge transfer layer (2, 8) comprises a conductive carbon ink.

4. The super-capacitor assembly of any of claims 1 through 3 wherein the elastomeric hydrophobic corrosion barrier layer (3, 7) comprises a polyisobutylene or polypropylene composition.

5. A super-capacitor assembly comprising:
a bottom aluminum current collector (9);
a first ionic permeable electron charge transfer layer (8) on top of the bottom aluminum current collector (9);
a first elastomeric hydrophobic corrosion barrier layer (7) on top of the first ionic permeable electron charge transfer layer (8), said first elastomeric hydrophobic corrosion barrier layer comprising carbon black rubber or alternative similar polymer composition dispersed in an aliphatic solvent;
capacitor layers (6, 5, 4);
a second elastomeric hydrophobic corrosion barrier layer (3) on top of the capacitor layers (6, 5, 4), said second elastomeric hydrophobic corrosion barrier layer (3) comprising carbon black rubber or alternative similar polymer composition dispersed in an aliphatic solvent;
a second ionic permeable electron charge transfer layer (2) on top of the second elastomeric hydrophobic corrosion barrier layer (3); and
a top aluminum current collector (1) on top of the second ionic permeable electron charge transfer layer (2).

6. The super-capacitor assembly of claim 5 wherein the first and second ionic permeable electron charge transfer layers (2, 8) comprise conductive carbon black, an alcohol, an ether and a binder dispersed in an aqueous medium.

7. The super-capacitor assembly of claim 5 wherein the first and second ionic permeable electron charge transfer layers (2, 8) comprise a conductive carbon ink.

8. The super-capacitor assembly of any of claims 5 through 7 wherein the elastomeric hydrophobic corrosion barrier layer (2, 7) comprises a polyisobutylene or polypropylene composition.

9. The super-capacitor assembly of any of claim 1-8 wherein the capacitor layers (4, 5, 6) comprise:
a first high surface area carbon layer (6);
a hybrid electrolyte impregnated paper separating membrane (5) on top of the first high surface area carbon layer (6); and
a second high surface area carbon layer (4) on top of the electrolyte impregnated paper separating membrane (5).

## Patentansprüche

1. Superkondensatoranordnung, umfassend Kondensatorschichten (4, 5, 6) zwischen einem oberen und einem unteren Aluminiumstromkollektor (1, 9) mit einer ionisch durchlässigen Elektronenladungsübertragungsschicht (2, 8) in direktem Kontakt mit einer elastomeren hydrophoben Korrosionsbarriereschicht (3, 7), umfassend Rußkautschuk oder eine alternative ähnliche Polymerzusammensetzung, die in einem aliphatischen Lösungsmittel dispergiert ist, zwischen den Kondensatorschichten (4, 5, 6) sowie dem oberen und dem unteren Aluminiumstromkollektor (1, 9).

2. Superkondensatoranordnung nach Anspruch 1, wobei die ionisch durchlässige Elektronenladungsübertragungsschicht (2, 8) leitfähigen Ruß, einen Alkohol, einen Ether und ein Bindemittel dispergiert in einem wässrigen Medium umfasst.

3. Superkondensatoranordnung nach Anspruch 1, wobei die ionisch durchlässige Elektronenladungsübertragungsschicht (2, 8) eine leitfähige Kohlenstofftinte umfasst.

4. Superkondensatoranordnung nach einem der Ansprüche 1 bis 3, wobei die elastomere hydrophobe Korrosionsbarriereschicht (3, 7) eine Polyisobutylen- oder Polypropylenzusammensetzung umfasst.

5. Superkondensatoranordnung, umfassend:
einen unteren Aluminiumstromkollektor (9);
eine erste ionisch durchlässige Elektronenladungsübertragungsschicht (8) auf dem unteren Aluminiumstromkollektor (9);
eine erste elastomere hydrophobe Korrosionsbarriereschicht (7) auf der ersten ionisch durchlässigen Elektronenladungsübertragungsschicht (8), wobei die erste elastomere hydrophobe Korrosionsbarriereschicht Rußkautschuk oder eine alternative ähnliche polymere Zusammensetzung, die in einem aliphatischen Lösungsmittel dispergiert ist, umfasst;
Kondensatorschichten (6, 5, 4);
eine zweite elastomere hydrophobe Korrosionsbarriereschicht (3) auf den Kondensatorschichten (6, 5, 4), wobei die zweite elastomere hydrophobe Korrosionsbarriereschicht (3) Rußkautschuk oder eine alternative ähnliche Polymerzusammensetzung, die in einem aliphatischen Lösungsmittel dispergiert ist, umfasst;
eine zweite ionisch durchlässige Elektronenladungsübertragungsschicht (2) auf der zweiten elastomeren hydrophoben Korrosionsbarriereschicht (3); und
einen oberen Aluminiumstromkollektor (1) auf der zweiten ionisch durchlässigen Elektronenladungsübertragungsschicht (2).

6. Superkondensatoranordnung nach Anspruch 5, wobei die erste und die zweite ionisch durchlässige Elektronenladungsübertragungsschicht (2, 8) leitfähigen Ruß, einen Alkohol, einen Ether und ein Bindemittel dispergiert in einem wässrigen Medium umfassen.

7. Superkondensatoranordnung nach Anspruch 5, wobei die erste und die zweite ionisch durchlässige Elektronenladungsübertragungsschicht (2, 8) eine leitfähige Kohlenstofftinte umfassen.

8. Superkondensatoranordnung nach einem der Ansprüche 5 bis 7, wobei die elastomere hydrophobe Korrosionsbarriereschicht (2, 7) eine Polyisobutylen- oder Polypropylenzusammensetzung umfasst.

9. Superkondensatoranordnung nach einem der Ansprüche 1 bis 8, wobei die Kondensatorschichten (4, 5, 6) umfassen:
eine erste Kohlenstoffschicht (6) mit hoher Oberfläche;
eine hybride Elektrolyt-imprägnierte Papiertrennmembran (5) auf der ersten Kohlenstoffschicht (6) mit hoher Oberfläche; und
eine zweite Kohlenstoffschicht (4) mit hoher Oberfläche auf der Elektrolyt-imprägnierten Papiertrennmembran (5).

## Revendications

1. Ensemble super-condensateur comprenant des couches de condensateur (4, 5, 6) entre des collecteurs de courant supérieur et inférieur en aluminium (1, 9) avec une couche de transfert de charge électronique (2, 8) perméable aux ions en contact direct avec une couche de barrière anticorrosion hydrophobe élastomère (3, 7) comprenant du caoutchouc au noir de carbone ou une composition polymère similaire alternative dispersée dans un solvant aliphatique entre les couches de condensateur (4, 5, 6) et les collecteurs de courant supérieur et inférieur en aluminium (1, 9).

2. Ensemble super-condensateur selon la revendication 1 dans lequel la couche de transfert de charge électronique (2, 8) perméable aux ions comprend du noir de carbone conducteur, un alcool, un éther et un liant dispersés dans un milieu aqueux.

3. Ensemble super-condensateur selon la revendication 1, dans lequel la couche de transfert de charge électronique (2, 8) perméable aux ions comprend une encre de carbone conductrice.

4. Ensemble super-condensateur selon l'une quelconque des revendications 1 à 3, dans lequel la couche élastomère hydrophobe de barrière anticorrosion (3, 7) comprend une composition de polyisobutylène ou de polypropylène.

5. Ensemble super-condensateur comprenant :
un collecteur de courant inférieur en aluminium (9) ;
une première couche de transfert de charge électronique (8) perméable aux ions par-dessus le collecteur de courant inférieur en aluminium (9) ;
une première couche élastomère hydrophobe de barrière anticorrosion (7) par-dessus la première couche de transfert de charge électronique (8) perméable aux ions, ladite première couche élastomère hydrophobe de barrière anticorrosion comprenant du caoutchouc au noir de carbone ou une autre composition polymère similaire dispersée dans un solvant aliphatique ;
des couches de condensateurs (6, 5, 4) ;
une seconde couche élastomère hydrophobe de barrière anticorrosion (3) par-dessus les couches de condensateurs (6, 5, 4), ladite seconde couche élastomère hydrophobe de barrière anticorrosion (3) comprenant du caoutchouc au noir de carbone ou une autre composition polymère similaire dispersée dans un solvant aliphatique ;
une seconde couche de transfert de charge électronique (2) perméable aux ions par-dessus la seconde couche hydrophobe élastomère de protection anticorrosion (3) ; et
un collecteur de courant supérieur en aluminium (1) par-dessus la seconde couche de transfert de charge électronique (2) perméable aux ions.

6. Ensemble super-condensateur selon la revendication 5, dans lequel les première et seconde couches de transfert de charge électronique (2, 8) perméables aux ions comprennent du noir de carbone conducteur, un alcool, un éther et un liant dispersés dans un milieu aqueux.

7. Ensemble super-condensateur selon la revendication 5, dans lequel les première et seconde couches de transfert de charge électronique (2, 8) perméables aux ions comprennent une encre de carbone conductrice.

8. Ensemble super-condensateur selon l'une quelconque des revendications 5 à 7, dans lequel la couche élastomère hydrophobe de barrière anticorrosion (2, 7) comprend une composition de polyisobutylène ou de polypropylène.

9. Ensemble super-condensateur selon l'une quelconque des revendications 1 à 8, dans lequel les couches de condensateurs (4, 5, 6) comprennent :
une première couche de carbone à grande surface spécifique (6) ;
une membrane de séparation en papier imprégné d'électrolyte hybride (5) par-dessus la première couche de carbone à grande surface spécifique (6) ; et
une seconde couche de carbone à grande surface spécifique (4) par-dessus la membrane de séparation en papier imprégné d'électrolyte (5).
